# DEMANDE DE BREVET EUROPEEN

(11) **EP 4 198 643 A1**
(43) Date de publication de la demande: **21.06.2023**
(21) Numéro de dépôt: 22209021.9
(22) Date de dépôt: 23.11.2022
(51) Int. Cl.: G04B 19/10, B29C 45/14, G04D 3/00

(54) **SYSTÈME DE REALISATION D'AU MOINS UN ÉLÉMENT TRIDIMENSIONNEL SUR UN ELEMENT D' HABILLAGE D'UNE PIÈCE D'HORLOGERIE**

(30) Priorité: 20.12.2021 EP 21216096
(71) Demandeur: Rubattel et Weyermann S.A., 2300 La Chaux-de-Fonds (CH)
(72) Inventeur: ENGGIST, Yann, 3232 Ins (CH); JEANRENAUD, Frédéric, 2300 La Chaux-de-Fonds (CH)
(74) Mandataire: ICB SA

(57) **Abrégé**

Un aspect de l'invention concerne un système (1) de réalisation d'au moins un élément tridimensionnel sur une face visible (21a) d'un élément d'habillage (4) d'une pièce d'horlogerie (100), le système (1) comprenant :
- un moule (2) formée par l'assemblage réversible d'une première pièce (8a) et d'une deuxième pièce (8b) configurée pour recevoir une plaque de support (3) de l'élément d'habillage (4), le moule (2) comprenant au moins une cavité (7) formée par l'association de la première pièce (8a) comportant au moins une empreinte (5) avec la face visible (21a) de l'élément d'habillage (4), chaque cavité (7) participant à la réalisation d'une ébauche (20) de l'élément tridimensionnel (10) à partir d'un surmoulage par injection de matière injectable sur ladite face visible (21a), et
- un dispositif d'application (12) d'un revêtement sur ladite ébauche (20) surmoulée sur la face visible (21a) de l'élément d'habillage (4) participant à la finalisation de cette ébauche (20) de l'élément tridimensionnel (10).

## Description

### Domaine technique de l'invention

L'invention porte sur un procédé et un système de réalisation d'au moins un élément tridimensionnel sur une face visible d'un élément d'habillage d'une pièce d'horlogerie.

L'invention porte aussi sur l'élément d'habillage comprenant au moins un élément tridimensionnel.

L'invention porte également sur la pièce d'horlogerie comportant un tel élément d'habillage.

### Arrière-plan technologique

Dans l'état de la technique, les éléments tridimensionnels tels que des appliques prévues pour être disposées sur des éléments d'habillage comme des cadrans de montres, sont le plus souvent réalisés à partir de procédés mettant en oeuvre des techniques de décalque, voire de sérigraphie ou encore de matriçage d'une face inférieure du cadran avec les parties en relief formant les appliques qui sont alors dans ce contexte polies, vernies, ou recouvertes d'un pigment luminescent. Ces appliques peuvent également être des pièces rapportées sur le cadran en étant produites à partir de procédés mettant en oeuvre des techniques d'étampage/d'usinage d'une plaque métallique puis de collage, par exemple au moyen d'une colle durcissable à chaud.

Lorsqu'on veut obtenir des pièces de grande qualité, les appliques sont alors le plus souvent pourvues de pieds pour leur fixation sur le cadran par collage, soudage ou encore rivetage. Les appliques sont ébauchées à partir de procédés mettant en oeuvre des techniques d'usinage ou d'étampage dans un profilé, puis repris pour facettage. Cependant un des inconvénients de tels procédés est lié au fait qu'ils peuvent être la cause de la présence d'imperfections sur les surfaces de ces appliques.

De plus, ces différents procédés requièrent souvent beaucoup de manutention de la part des opérateurs qui en ont la charge, ce qui s'avère long et fastidieux étant donné la petite taille des pièces à manipuler, en particulier la mise en cadran.

### Résumé de l'invention

Le but de la présente invention est de pallier en tout ou partie les inconvénients cités précédemment en proposant un procédé et un système permettant la réalisation d'au moins un élément tridimensionnel sur une face visible d'un élément d'habillage d'une pièce d'horlogerie qui soit de grande qualité.

Dans ce dessein l'invention porte sur un procédé de réalisation d'au moins un élément tridimensionnel sur une face visible d'un élément d'habillage d'une pièce d'horlogerie, ledit procédé comprenant les étapes suivantes :
- conception d'une plaque de support comprenant l'élément d'habillage comprenant une sous-étape de création d'au moins une ouverture traversante dans l'épaisseur de l'élément d'habillage ladite ouverture traversante comprenant une section transversale variable le long de son axe de révolution reliant les centres de ses orifices d'entrée et de sortie entre eux ;
- agencement d'une plaque de support comprenant l'élément d'habillage dans un moule formé par l'assemblage réversible d'une première et d'une deuxième pièces, ladite étape d'agencement comprenant une sous-étape de formation d'au moins une cavité dans ce moule par l'association de la première pièce comportant au moins une empreinte avec la face visible de l'élément d'habillage ;

- construction d'une ébauche de chaque élément tridimensionnel sur la face visible de l'élément d'habillage ladite étape comprenant une sous-étape de surmoulage par injection de matière injectable dans la cavité par l'intermédiaire d'une ouverture traversante ménagée dans ledit élément d'habillage pourvue d'un orifice d'entrée de ladite cavité ;
- finalisation de l'ébauche de l'élément tridimensionnel comprenant une sous-étape d'application d'un revêtement sur ladite ébauche surmoulée sur l'élément d'habillage après la réalisation d'une des sous-étapes suivantes de cette étape de finalisation :
   ▪ une sous-étape de désassemblage de la première pièce de la deuxième pièce du moule, ou
   ▪ une sous-étape de retrait dudit moule de la plaque de support comprenant l'élément d'habillage pourvu d'au moins une ébauche d'un élément tridimensionnel surmoulé sur sa face.

Dans d'autres modes de réalisation :
- ladite étape d'agencement comprend une sous-étape d'assemblage réversible de la deuxième pièce avec la plaque de support comprenant l'élément d'habillage ladite sous étape comprenant une phase de connexion d'une extrémité d'un circuit d'injection ménagé dans cette deuxième pièce avec l'orifice d'entrée de l'ouverture traversante de l'élément d'habillage ;
- ladite sous-étape de retrait comprend une phase de rupture d'un point d'injection liant ledit élément d'habillage à la deuxième pièce ;
- la sous-étape de surmoulage comprend une phase de régulation de la température dudit moule notamment durant une période s'étalant avant le début de la phase d'injection de matière injectable dans la cavité jusqu'à la fin de cette phase injection de matière voire après cette fin de cette phase d'injection ;

- la sous-étape de surmoulage comprend une phase de mise sous vide de ladite cavité avant la phase d'injection de la matière injectable dans cette cavité ;
- la sous-étape d'application comprend une phase de dépôt d'une matière décorative et/ou fonctionnelle sur une face externe visible de l'ébauche de l'élément tridimensionnel surmoulée sur l'élément d'habillage ;
- le procédé comprend une étape d'élaboration d'au moins une empreintes dans la première pièce à partir d"au moins une pièce originale relative audit au moins un élément tridimensionnel devant être fabriqué.
- l'étape de conception de la plaque de support comprend une sous-étape de création d'au moins une ouverture borgne dans l'épaisseur de l'ébauche de l'élément d'habillage, l'ouverture borgne comprenant une section transversale variable le long de son axe de révolution reliant les centres de l'orifice d'entrée de la matière injectable et du fond de cette ouverture entre eux.

L'invention porte aussi sur un système de réalisation d'au moins un élément tridimensionnel sur une face visible d'un élément d'habillage d'une pièce d'horlogerie mettant en oeuvre ce procédé, le système comprenant :
- un moule formée par l'assemblage réversible d'une première pièce et d'une deuxième pièce configurée pour recevoir une plaque de support de l'élément d'habillage, le moule comprenant au moins une cavité formée par l'association de la première pièce comportant au moins une empreinte avec la face visible de l'élément d'habillage, chaque cavité participant à la réalisation d'une ébauche de l'élément tridimensionnel à partir d'un surmoulage par injection de matière injectable sur ladite face visible, et
- un dispositif d'application d'un revêtement sur ladite ébauche surmoulée sur la face visible de l'élément d'habillage participant à la finalisation de cette ébauche de l'élément tridimensionnel.

L'invention porte aussi sur un élément d'habillage pour une pièce d'horlogerie comprenant au moins un élément tridimensionnel susceptible d'être réalisé sur sa face visible à partir dudit procédé.

L'invention porte également sur une pièce d'horlogerie comprenant un tel élément d'habillage.

### Brève description des figures

Les buts, avantages et caractéristiques de la présente invention ressortiront plus clairement de la description détaillée qui suit, faite en liaison avec les figures annexées listées ci-dessous :
- la figure 1 est une représentation d'un système de réalisation d'au moins un élément tridimensionnel sur une face visible d'un élément d'habillage d'une pièce d'horlogerie, selon un mode de réalisation de l'invention ;
- la figure 2 est une vue en coupe d'une partie d'un moule du système, selon le mode de réalisation de l'invention ;
- la figure 3 est un logigramme relatif à un procédé de réalisation dudit au moins un élément tridimensionnel sur la face visible de l'élément d'habillage, selon le mode de réalisation de l'invention ;
- la figure 4 est une représentation d'une plaque de support comprenant l'élément d'habillage ici un cadran de la pièce d'horlogerie, sur cette figure peut être vue une face visible de ce cadran qui est pourvue de plusieurs ébauches d'éléments tridimensionnels, tels que des appliques, surmoulés sur cette face, selon le mode de réalisation de l'invention ;
- la figure 5 est une représentation de la plaque de support comprenant l'élément d'habillage ici le cadran de la pièce d'horlogerie sur cette figure peut être vue une face cachée de ce cadran et qui est reliée à une carotte formée essentiellement par une deuxième pièce du moule non représentée, selon le mode de réalisation de l'invention ;
- la figure 6 est une vue de profil de la plaque de support comprenant l'élément d'habillage ainsi que d'une carotte formée dans le moule, selon le mode de réalisation de l'invention ;
- les figures 7 et 8 sont des vues en coupe de différentes variantes d'ébauches d'éléments tridimensionnels surmoulées sur l'élément d'habillage, selon le mode de réalisation de l'invention, et
- la figure 9 représente une pièce d'horlogerie comprenant un élément d'habillage pourvu d'au moins un élément tridimensionnel, selon un mode de réalisation de l'invention.

### Description détaillée de l'invention

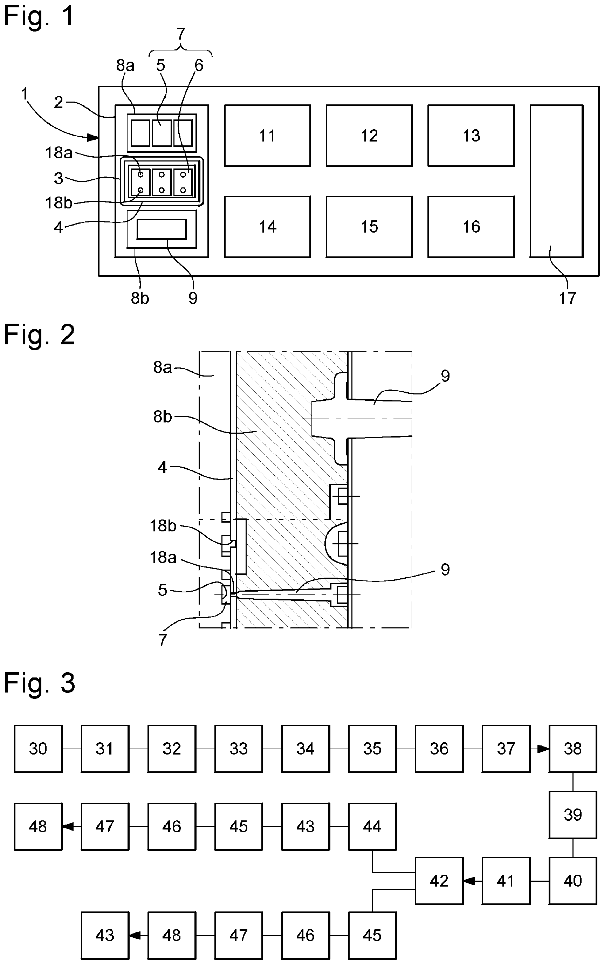

La figure 1 montre une représentation schématique d'un système 1 de réalisation d'au moins un élément tridimensionnel 10 sur un élément d'habillage 4 d'une pièce d'horlogerie 100. Cet élément tridimensionnel 10 représenté sur les figures 1, 2, 4 à 9, est réalisé sur une face visible 21a, aussi appelée face supérieure, de cet élément d'habillage 4 c'est-à-dire sur une face 21a qui peut être vue par le porteur de la pièce d'horlogerie 100 lorsque cet élément d'habillage 4 est monté dans cette pièce 100. Cette face 21a de l'élément d'habillage 4 est dite « visible » en référence à la possibilité qu'elle a de pourvoir être perçue lorsqu'elle est montée dans la pièce d'horlogerie 100 et ce, contrairement à l'autre face 21b de cet élément d'habillage 4 qui est opposée à cette face visible 21a par exemple lorsque cet élément 4 est un cadran.

Un tel système 1 est apte à être mis en oeuvre au sein d'une installation automatique d'assemblage (ou chaîne d'assemblage automatique) dédiée à la fabrication de tout ou partie d'une pièce d'horlogerie 100. En pareil contexte, ce système 1 participe à fabriquer et à assurer la distribution d'éléments d'habillage 4 comprenant au moins un élément tridimensionnel 10 au sein de cette installation d'assemblage automatique.

La pièce d'horlogerie 100 est constituée d'éléments d'habillage 4 et de composants horlogers (non représentés) qui sont assemblés ensemble. Dans ce contexte, les éléments d'habillage 4 peuvent être des éléments visibles ou observables de la pièce d'horlogerie 100 lorsque cette dernière est notamment portée par l'utilisateur encore appelé porteur. S'agissant des composants horlogers, ils comprennent de manière non limitative non exhaustive des éléments constituant le mouvement horloger, les joints et/ou bagues compris dans cette pièce d'horlogerie 100. Dans ces conditions, on comprend donc que chaque élément d'habillage 4 fait partie des éléments de la pièce d'horlogerie 100 qui entourent le mouvement horloger et qui donne à la montre son aspect extérieur, son esthétique et son style. A titre d'exemple, cet élément d'habillage 4 peut être de manière non limitative et non exhaustive un cadran, un réhaut, une lunette, etc...

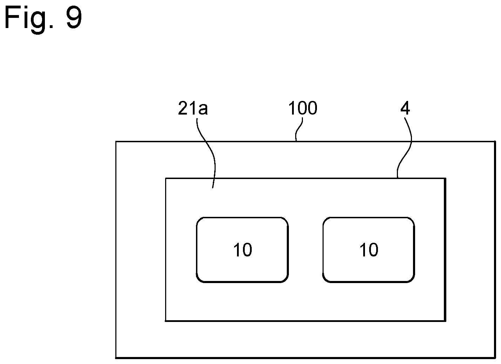

On notera que dans le mode de réalisation décrit et en référence à la figure 9, l'élément d'habillage 4 est ici le cadran de la pièce d'horlogerie 100 et l'élément tridimensionnel 10 est une applique de ce cadran.

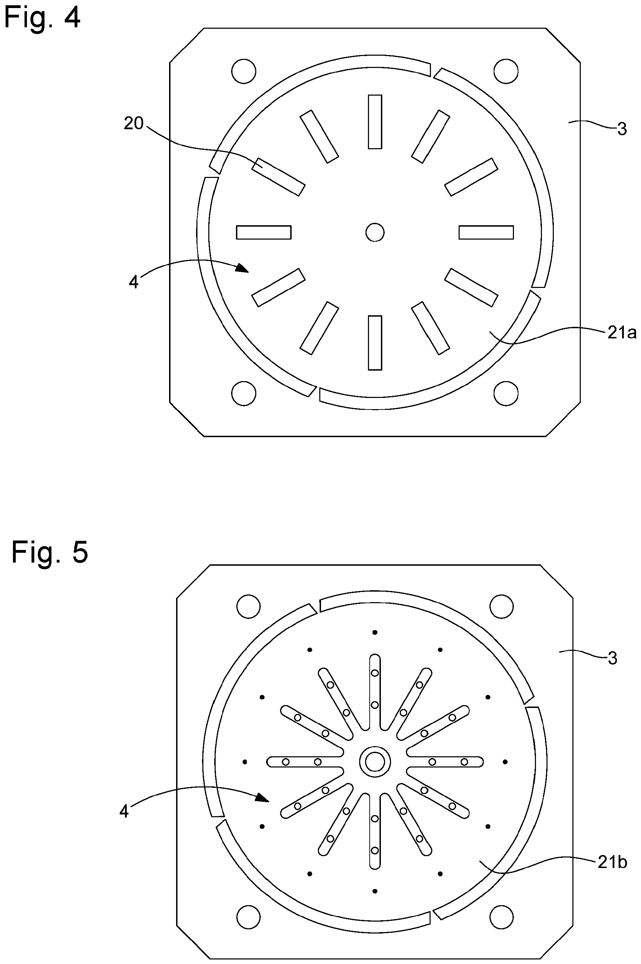

Ainsi que nous l'avons évoqué précédemment, cet élément d'habillage 4 comprend aussi une face dite cachée 21b, aussi appelée face inférieure, qui est une face opposée à la face visible 21a (visible sur les figures 4 à 8).

En référence aux figures 1 et 2, ce système 1 comprend de manière non exhaustive et non limitative :
- un moule 2 formé par l'assemblage réversible d'une première pièce 8a avec une deuxième pièce 8b susceptible de recevoir une plaque de support 3 comprenant au moins un élément d'habillage 4.
- un dispositif d'injection 11 d'une matière injectable dans ce moule 2 ;
- un dispositif d'application 12 d'un revêtement sur une ébauche de l'élément tridimensionnel 10 surmoulée sur l'élément d'habillage 4 ;
- un dispositif de conception 13 d'une pièce originale encore appelée « master » relative à l'élément tridimensionnel 10 à fabriquer, mettant notamment en oeuvre des techniques de lithographie en particulier de lithographie optique par projection ultraviolet, de lithographie optique par projection DUV (acronyme de « Deep Ultra-Violet »), de lithographie à immersion, de lithographie double exposition, de lithographie extrême ultra-violet et/ou de lithographie par nanoimpression ;
- un dispositif d'élaboration 14 dudit au moins un élément tridimensionnel 10 à partir de la pièce originale mettant notamment en oeuvre des techniques de réplication Ni shims ou BMG ;
- un dispositif de mise sous vide 15 dudit moule 2 et/ou un dispositif de régulation 16 de la température au sein de ce moule 2, et
- un dispositif de retrait et d'agencement 17 de la plaque de support 3 d'au moins un élément d'habillage 4 dans le moule 2.

Dans cette configuration, ce moule 2 comprend un logement formé par l'assemblage de la première pièce 8a avec la deuxième pièce 8b et dans lequel est susceptible d'être agencée la plaque de support 3 comprenant l'élément d'habillage 4. On comprend que la plaque 3 peut comprendre un seul élément d'habillage 4 ou dans une alternative plusieurs éléments d'habillage 4.

Dans ce moule 2, la deuxième pièce 8b comprend une face de réception configurée pour recevoir une telle plaque de support 3. Plus précisément, la plaque de support 3 est montée sur la face de réception de la deuxième pièce 8b de manière à ce que la face cachée 21b de l'élément d'habillage 4 est agencée en regard voire au contact de tout ou partie de cette face de réception. Dans cette configuration, la face visible 21a de l'élément d'habillage 4 est quant à elle en regard et en contact avec une face interne de la première pièce 8a. Autrement dit, la plaque de support 3, et donc l'élément d'habillage 4, est agencée dans le logement de ce moule 2 en étant pris en sandwich entre les première et deuxième pièces 8a, 8b de ce moule 2.

La face interne de cette première pièce 8a du moule 2 peut comprendre une unique empreinte 5 ou encore de plusieurs empreintes 5 relatives chacune à un élément tridimensionnel 10 à surmouler sur la face visible 21a de l'élément d'habillage 4. Ces empreintes 5 présentent chacune une forme creuse définie dans cette face interne plane de la première pièce 8a.

La face visible 21a de l'élément d'habillage 4 comprend une zone 6, aussi appelée zone de surmoulage 6, qui est définie pour former avec ladite empreinte 5 une cavité 7 dans laquelle une matière injectable est injectée et ce, de manière à participer à la conception de ladite ébauche 20 de l'élément tridimensionnel 10. Cette cavité 7 définit la forme finale de ladite ébauche 20 et donc de l'élément tridimensionnel 10 qui sont réalisés par la coopération de l'empreinte 5 et la zone 6 correspondante de la face visible 21a de l'élément d'habillage 4. Dans cette configuration, cette zone 6 est donc agencée en regard de cette dite empreinte 5 lorsque la première pièce 8a et l'élément d'habillage 4 sont assemblés l'un avec l'autre. On notera que le moule 2 comprend autant de cavités 7 que cette première pièce 8a comporte d'empreintes 5 et/ou que l'élément d'habillage 4 comprend de zones de surmoulage 6.

Dans ce contexte, lorsque le système 1 est pourvu du dispositif de régulation 16 de la température au sein dudit moule 2, la première pièce 8a peut alors comprendre un circuit d'injection (non représenté) défini dans le corps de cette première pièce 8a qui est essentiellement agencé en dessous de chaque empreinte 5. Un tel circuit est raccordé au dispositif de régulation 16 de la température qui est alors apte à engendrer la circulation d'un fluide de refroidissement ou un fluide de chauffage dans ce circuit.

Dans l'élément d'habillage 4 compris dans la plaque de support 3, la face visible 21a et la face cachée 21b sont de préférence planes. Ces faces visible et cachée 21a, 21b sont aussi appelées respectivement les faces supérieure et inférieure de l'élément d'habillage 4. Dans ce moule 2, la face visible 21a de cet élément d'habillage 4 est apte à être en contact avec la face interne de la première pièce 8a lorsque cette première pièce 8a est assemblée à la deuxième pièce 8b. Dans cette configuration, on comprend que l'élément d'habillage 4 est agencé dans ce moule 2 en étant pris en sandwich entre ces première et deuxième pièces 8a, 8b.

En référence à la figure 2, cet élément d'habillage 4 comprend aussi au moins une ouverture traversante 18a, encore appelée canal traversant ou trou traversant, reliant la face cachée 21b de l'élément d'habillage 4 à la face de réception de la deuxième pièce 8b, cette ouverture traversante 18a comprenant une première extrémité, appelée orifice de sortie, débouchant dans la cavité 7 du moule 2 et une deuxième extrémité débouchant sur la face cachée 21b de l'élément d'habillage 4 appelée orifice d'entrée. On comprend que l'élément d'habillage 4 comprend au moins autant d'ouvertures traversantes 18a que le moule 2 comprend de cavités 7.

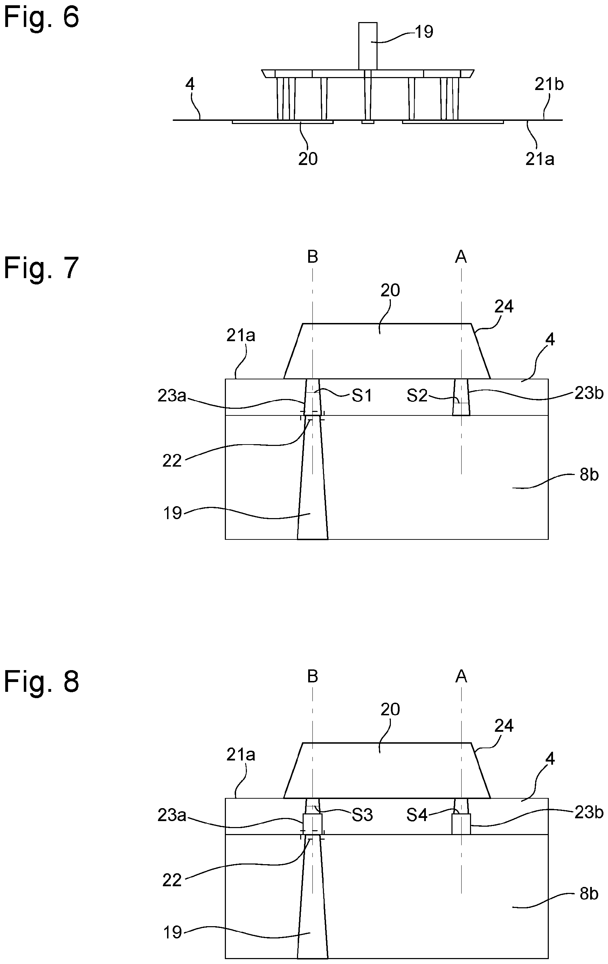

On notera en référence aux figures 7 et 8 que lorsque l'élément d'habillage 4 est un cadran, cette ouverture traversante 18a en comprenant de la matière injectable participe à former un pied 23a, de l'élément tridimensionnel 10. Ce pied 23a est configuré notamment dans sa forme pour assurer un ancrage de cet élément tridimensionnel 10 dans le corps de l'élément d'habillage 4. D'ailleurs, la zone 6 qui est prévue pour former avec ladite empreinte 5 la cavité 7, peut comprendre en plus de cette ouverture traversante 18a, une ouverture borgne 18b, encore appelée trou borgne, comprenant un orifice d'entrée défini dans la face visible 21a de l'élément d'habillage 4. Un telle ouverture borgne 18b en comprenant de la matière injectable participe à former un autre pied 23b de l'élément tridimensionnel 10 qui est aussi configuré notamment dans sa forme pour assurer un ancrage de cet élément tridimensionnel 10 dans le corps de l'élément d'habillage 4.

Dans ce contexte, le corps de ces ouvertures traversante et borgne18a, 18b est formé d'un ensemble de sections S1, S2, S3, S4 transversales axiales qui sont perpendiculaires à un axe longitudinal A, B de ces ouvertures 18a, 18b. Dans cette configuration, l'ouverture traversante 18a s'étend selon l'axe longitudinal A, autrement appelé l'axe de révolution A, reliant les centres des orifices d'entrée et de sortie entre eux. S'agissant de l'ouverture borgne 18b, elle s'étend également selon l'axe longitudinal B, autrement appelé axe de révolution B, reliant les centres de l'orifice d'entrée de la matière injectable et du fond de cette ouverture 18b entre eux. Ces axes longitudinaux A, B sont sensiblement parallèles ou strictement parallèles entre eux. Dans cette configuration, on remarquera que :
- l'ouverture traversante 18a comprend au moins une section S1, S3 transversale axiale comprise entre l'orifice d'entrée et l'orifice de sortie, dont la surface est strictement différente ou sensiblement différente d'une surface d'une section transversale axiale comprenant l'orifice d'entrée et d'une surface d'une section transversale axiale comprenant l'orifice de sortie ;
- l'ouverture traversante 18a comprend au moins une section S1, S3 transversale axiale comprise entre l'orifice d'entrée et l'orifice de sortie, dont la surface est strictement différente ou sensiblement différente d'une surface d'une section transversale axiale comprenant l'orifice d'entrée ou d'une surface d'une section transversale axiale comprenant l'orifice de sortie ;
- l'ouverture traversante 18a comprend au moins une section S1, S3 transversale axiale comprise entre l'orifice d'entrée et l'orifice de sortie, dont la surface est
   - strictement supérieure ou sensiblement supérieure à une surface d'une section transversale axiale comprenant l'orifice de sortie, et/ou
   - strictement inférieure ou sensiblement inférieure à une surface d'une section transversale axiale comprenant l'orifice d'entrée ;
- l'ouverture borgne 18b comprend au moins une section S2, S4 transversale axiale comprise entre l'orifice d'entrée et le fond, dont la surface est strictement différente ou sensiblement différente d'une surface d'une section transversale axiale comprenant l'orifice d'entrée et d'une surface d'une section transversale axiale comprenant le fond ;
- l'ouverture borgne 18b comprend au moins une section S2, S4 transversale axiale comprise entre l'orifice d'entrée et le fond, dont la surface est strictement différente ou sensiblement différente d'une surface d'une section transversale axiale comprenant l'orifice d'entrée ou d'une surface d'une section transversale axiale comprenant le fond ;
- l'ouverture borgne 18b comprend au moins une section S2, S4 transversale axiale comprise entre l'orifice d'entrée et le fond, dont la surface est :
   - strictement supérieure ou sensiblement supérieure à une surface d'une section transversale axiale comprenant l'orifice de sortie, et/ou
   - strictement inférieure ou sensiblement inférieure à une surface d'une section transversale axiale comprenant l'orifice d'entrée.

Dans cette configuration on comprend donc que l'ouverture traversante 18a comprend une section transversale variable le long de son axe de révolution A reliant les centres de ses orifices d'entrée et de sortie entre eux. De même, l'ouverture borgne 18b comprend une section transversale variable le long de son axe de révolution B reliant les centres de l'orifice d'entrée de la matière injectable et du fond de cette ouverture 18b entre eux. On notera que dans ce contexte, chaque section est transversale par rapport l'axe de révolution A, B. Rappelons que la section concerne ici la surface, le diamètre et/ou la dimension d'une coupe plane transversale de l'ouverture borgne ou l'ouverture traversante.

Dans ce contexte et à titre d'exemple, sur la figure 7 l'ouverture traversante 18a et l'ouverture borgne 18b peuvent avoir une forme essentiellement tronconique ou encore une forme similaire à celle d'un tube dont le corps comprend deux parties présentant des sections transversales différentes ou encore des diamètres différents comme cela est représenté sur la figure 8.

Ainsi que nous l'avons évoqué, le moule 2 comprend au moins une cavité 7. Cette cavité 7 est formée par l'assemblage de l'empreinte 5 comprise dans la face interne de la première pièce 8a avec la zone 6 correspondante de la face visible 21a de l'élément d'habillage 4. La zone 6 comprend l'ouverture traversante 18a ménagée dans l'élément d'habillage 4 qui débouche via son orifice de sortie dans la cavité 7. Cette ouverture traversante 18a est connectée/reliée par l'intermédiaire de son orifice d'entrée au dispositif d'injection 11 de matière injectable et ce, via le circuit d'injection 9 défini dans la deuxième pièce 8b du moule 2. On notera que dans cette configuration, lorsque la cavité 7 comprend également une ouverture borgne 18b, l'orifice d'entrée de cette ouverture est alors défini dans la zone 6 de surmoulage de la face visible 21a de l'élément d'habillage 4.

Dans cette configuration, la portion de matière injectable qui est solidifiée dans l'orifice d'entrée de l'ouverture traversante 18a forme un point d'injection 22 qui est défini pour être rompu notamment lors de la désolidarisation de l'élément d'habillage 4 avec la deuxième pièce 8b comme cela est décrit par la suite. En effet, ce point d'injection 22 participe au maintien de la plaque de support 3, et donc de l'élément d'habillage 4, sur la deuxième pièce 8b en la liant à une carotte 19 formée dans ce moule 2. Ce point d'injection 22 est situé de préférence au niveau de l'orifice d'entrée de l'ouverture traversante 18a. Autrement dit, ce point d'injection 22 est situé à l'extrémité ou au niveau de la base du pied 23a, formé dans l'ouverture traversante 18a, de cet élément tridimensionnel 10.

On notera que cette carotte 19 qui est visible sur la figue 6, comprend une première partie formée par la solidification de la matière injectable dans l'ouverture traversante 18a et une deuxième partie formée par la solidification de la matière injectable dans le circuit d'injection 9 ménagé dans la deuxième pièce 8b.

En outre, dans cette configuration, on comprend bien que l'empreinte 5 vient former la partie visible de l'élément tridimensionnel 10 tel qu'une applique lorsque l'élément d'habillage 4 est un cadran, et la zone 6 correspondante de l'élément d'habillage 4 participe quant à elle à la formation de la partie de liaison de cette applique avec le cadran à partir des pieds 23a, 23b de cette applique.

Ainsi que nous l'avons déjà évoqué, dans ce moule 2, la deuxième pièce 8b est prévue pour être assemblée de manière réversible avec une face de montage de la plaque de support 3 et/ou avec la face cachée 21b de l'élément d'habillage 4. Cette deuxième pièce 8b comprend ledit au moins un circuit d'injection 9 de matière injectable relié en une première extrémité au dispositif d'injection 11 et en une deuxième extrémité à chaque ouverture traversante 18a de l'élément d'habillage 4 de la plaque de support 3. On notera que lorsque le système 1 est pourvu du dispositif de mise sous vide 15 dudit moule 2, un circuit de vide peut être défini dans le corps de la deuxième pièce 8b qui est relié en une extrémité à une ouverture traversante 18a de l'élément d'habillage 4 ainsi qu'en une autre extrémité à ce dispositif de mise sous vide 15, ledit dispositif 15 étant ainsi apte à provoquer un vide d'air dans chaque cavité 7 du moule 2. Dans cette configuration, on comprend que l'une des fonctions de la deuxième pièce 8b est d'assurer l'acheminement de la matière injectable vers l'ouverture traversante 18a d'injection de matière et de participer le cas échéant à mettre sous vide la cavité 7 du moule 2.

Dans ce système 1, le dispositif d'application 12 d'un revêtement sur une ébauche 20 de l'élément tridimensionnel 10 surmoulé sur l'élément d'habillage 4 est apte à appliquer/déposer un revêtement comprenant une matière décorative de type métallique et/ou une matière fonctionnelle sur une surface externe 24 de l'ébauche 20 de cet élément tridimensionnel 10. Un tel dispositif 12 peut comprendre un module d'impression pourvu notamment d'un organe d'éjection de cette matière décorative et/ou fonctionnelle, et/ou d'un organe de pulvérisation d'une telle matière et/ou d'un organe de pulvérisation d'une pellicule/film comportant une telle matière. On notera que l'organe de pulvérisation peut être un organe de pulvérisation cathodique par courant continu ou encore un organe de pulvérisation magnétron pulsé à haute puissance plus connu sous l'acronyme HIPIMS pour « High Power Impulse Magnétron Sputtering ». On notera que d'autres techniques peuvent être mises en oeuvre comme celles dites de « transfert à chaud » du revêtement sur l'ébauche 20.

Dans ce système 1, la matière décorative peut être formée d'une encre, ou encore d'un métal ou d'un alliage métallique. Cette matière décorative participe à modifier l'aspect esthétique de l'élément tridimensionnel 10 en étant appliquée sur l'ébauche 20 de cet élément tridimensionnel 10. S'agissant de la matière fonctionnelle, elle vise à conférer à l'élément tridimensionnel 10 des caractéristiques fonctionnelles physiques et/ou chimiques liées par exemple à :
- la conductivité électrique, caractère semi-conducteur ou isolant ;
- la semi-conductivité ;
- l'électroluminescence ;
- la photoluminescence (par exemple une réaction à un rayonnement ultraviolet) ;
- la phosphorescence ;
- « X-chromisme » (photochrome, électrochrome, thermochrome, ionochrome, mécanochrome...) ;
- l'électroactivation ;
- le magnétisme ;
- etc.

Dans ce système 1, la matière injectable utilisée est par exemple une matière organique et/ou composite, ou une matière métallique ou céramique ou encore une matière thermodéformable, thermodurssissable, ou thermoplastique. A titre d'exemples cette matière peut comprendre les éléments suivants :
- plastique chargé type SLN (phosphorescent) et pigments de couleur et/ou fluorescent ;
- polymère chargé en céramique avec et sans pigment de couleur ;
- un additif permettant de donner un aspect métallique/brillant, type poudre en aluminium, poudre métallique ;
- additif permettant de rendre conducteur le polymère (pour des raisons techniques ou pour un post traitement chimique/galvanique ou autre) ;
- additif donnant un rendu esthétique recopiant un matériau (nacre, pierre...) ;
- additif donnant des caractéristiques mécaniques et/ou tribologiques particulières ;
- BMG plus connue sous l'acronyme « Bulk Metallic Glass » ;
- matière inoxydable ;
- matière métallique frittable ;
- céramique ;
- silicon, et/ou
- combinaison d'un ou l'autre de ces éléments entre eux ou plusieurs de ces derniers entre eux.

Dans cette configuration, on comprend bien qu'un tel système 1 peut permettre de fabriquer plusieurs éléments tridimensionnels 10 surmoulés de manière simultanée sur la face visible 21a de l'élément d'habillage 4. Pour ce faire, la première pièce 8a comprend alors plusieurs empreintes 5 et est apte à participer avec notamment l'élément d'habillage 4 à l'obtention d'une série d'éléments tridimensionnels 10 surmoulés sur la face visible 21a de cet élément d'habillage 4. En alternative, on comprend bien que la première pièce 8a peut comprendre une unique empreinte 5 relative à une ébauche de l'élément tridimensionnel 10 surmoulée sur la face visible 21a de l'élément d'habillage 4.

En référence à la figure 3, ce système 1 met en oeuvre un procédé de réalisation dudit au moins un élément tridimensionnel 10 sur la face visible 21a, de l'élément d'habillage 4 de la pièce d'horlogerie 100.

Un tel procédé comprend une étape de conception de la plaque de support 3 comprenant l'élément d'habillage. Ladite étape comprenant une sous-étape de réalisation de plusieurs trous traversant dans l'épaisseur du corps de la plaque de support, lesdits trous délimitant dans une telle ébauche de plaque le bord de l'élément d'habillage. Dans cette configuration, l'élément d'habillage est retenu au reste du corps de la plaque par des parties de cette plaque comprise chacune entre deux trous.

Cette étape de conception comprend ensuite une sous-étape de création d'au moins une ouverture traversante 18a dans l'épaisseur de l'élément d'habillage ladite ouverture traversante 18a comprenant une section transversale variable le long de son axe de révolution A reliant les centres de ses orifices d'entrée et de sortie entre eux. Une telle configuration de l'ouverture traversante 18a, contribue à définir la forme du pied 23a de l'élément tridimensionnel 10 formé par la matière injectable comprise dans cette ouverture traversante 18a. Ainsi le pied 23a est configuré dans sa forme pour assurer un ancrage de cet élément tridimensionnel 10 dans le corps de l'élément d'habillage 4. Par ailleurs, on notera qu'une telle ouverture 18a est prévue pour relier ensuite la face cachée 21b de l'élément d'habillage à la face de réception de la deuxième pièce 8b du moule.

Cette étape de conception comprend par la suite une sous-étape d'application d'au moins un revêtement sur une face supérieure de l'élément d'habillage. On notera que cette face supérieure correspond à la face visible de l'élément d'habillage obtenu dans la plaque de support à l'issue de cette étape de conception. Lors de cette sous-étape, plusieurs couches peuvent être appliquées sur cette face visible.

Cette étape de conception comprend aussi une sous-étape de création d'au moins une ouverture borgne 18b dans l'épaisseur de l'ébauche de l'élément d'habillage, l'ouverture borgne 18b comprenant une section transversale variable le long de son axe de révolution reliant les centres de l'orifice d'entrée de la matière injectable et du fond de cette ouverture 18b entre eux. Une telle configuration de l'ouverture borgne 18b, contribue à définir la forme du pied 23b de l'élément tridimensionnel 10 formé par la matière injectable comprise dans cette ouverture borgne 18b. Ainsi le pied 23b est configuré dans sa forme pour assurer un ancrage de cet élément tridimensionnel 10 dans le corps de l'élément d'habillage 4.

Un tel procédé comprend une étape d'élaboration 30 d'au moins une empreinte 5 dans la première pièce 8a à partir d"au moins une pièce originale relative audit au moins un élément tridimensionnel 10 devant être fabriqué. On comprend que cette étape 30 est apte à participer à la réalisation d'autant d'empreintes 5 qu'il y a d'éléments tridimensionnel 10 à réaliser et ce, de manière à ce que de telles empreintes 5 soient surmoulées sur un même élément d'habillage 4. Cette étape 30 prévoit la réalisation d'une empreinte 5 à partir d'une pièce originale autrement appelée « *master* ». Cette pièce originale a une forme similaire à celle de l'élément tridimensionnel 10 devant être réalisé. On notera que la mise en oeuvre de cette étape 30 peut requérir autant de pièces originales qu'il y a d'empreintes 5 à réaliser.

Dans ce contexte, l'étape d'élaboration 30 comprend une sous-étape de conception 31 de ladite pièce originale mise en oeuvre à partir d'une technique de lithographie. Cette technique de lithographie est choisie parmi les techniques suivantes connues de l'état de la technique et qui ne sont pas décrites plus en détail ici : lithographie optique par projection ultraviolet, lithographie optique par projection DUV, lithographie à immersion, lithographie double exposition, lithographie extrême ultra-violet, lithographie par nanoimpression.

Cette étape d'élaboration 30 comprend ensuite une sous-étape de réplication 32 de la pièce originale visant à réaliser l'éléments d'habillage 5 par la reproduction d'une forme négative de la pièce originale. Cette sous-étape 32 prévoit en particulier la mise en oeuvre de techniques de réplication du type Ni shims ou BMG (acronyme « Bulk Metallic Glass ») connues de l'état de la technique et qui ne sont pas décrites plus en détail ici.

Par la suite, le procédé comporte une étape d'agencement 33 dans le moule 2 de la plaque de support 3 comprenant l'élément d'habillage 4 ledit moule 2 étant formé par l'assemblage réversible des première et deuxième pièces 8a, 8b. Lors de cette étape 33, la plaque de support 3 est positionnée dans le logement défini par l'assemblage réversible de ces première et deuxième pièces 8a, 8b. Une telle étape d'agencement 33 comprend une sous-étape d'assemblage 34 réversible de la deuxième pièce 8b avec la plaque de support 3 comprenant cet élément d'habillage 4. Cette sous-étape 34 comprend une phase de connexion 35 d'une extrémité du circuit d'injection 9 ménagé dans cette deuxième pièce 8b avec l'orifice d'entrée de l'ouverture traversante 18a de l'élément d'habillage 4. Une telle sous-étape 34 contribue à réaliser une connexion optimale entre l'extrémité du circuit d'injection 9 ménagé dans cette deuxième pièce 8b avec l'ouverture traversante 18a définie dans l'élément d'habillage 4 et en particulier avec l'orifice d'entrée de cette ouverture 18a. On comprend que ce circuit 9 comporte autant d'extrémités que l'élément d'habillage 4 comprend d'orifices d'entrée d'ouvertures traversantes 18a. On notera que l'orifice d'entrée est compris dans la face cachée 21b de l'élément d'habillage 4. Une telle étape d'agencement 33 comprend aussi une sous-étape de formation 36 d'au moins une cavité 7 dans ce moule 2 par l'association de la première pièce 8a comportant au moins une empreinte 5 avec la face visible 21a de l'élément d'habillage 4. On notera que chaque cavité 7 est définie pour l'élaboration/la formation de l'ébauche 20 de l'élément tridimensionnel 10. Autrement dit, cette cavité 7 du moule 2 en étant formée par l'association d'au moins une empreinte 5 de la première pièce 8a du moule 2 avec la face visible 21a de l'élément habillage de ce moule 2, définit un espace correspondant au volume et à la forme de l'ébauche 20 de l'élément tridimensionnel 10 qui est ici réalisé.

Le procédé comprend ensuite, une étape de construction 37 de ladite au moins une ébauche 20 relative à l'élément tridimensionnel 10 sur la face visible 21a de l'élément d'habillage 4. Cette étape 37 comprend une sous-étape de surmoulage 38 par injection de matière injectable dans la cavité 7 au travers d'une ouverture traversante 18a ménagée dans ledit élément d'habillage 4 pourvue d'un orifice d'entrée de ladite cavité 7. Cette sous-étape 38 vise à réaliser un surmoulage de l'ébauche 20 de l'élément tridimensionnel 10 sur la zone 6 correspondante de la face visible 21a de l'élément d'habillage 4. Une telle sous-étape 38 comprend une phase d'injection 39 dans cette cavité 7 de la matière injectable provenant du dispositif d'injection 11 de cette matière. Dans ce contexte, la matière injectable provenant du dispositif d'injection 11 est introduite dans la cavité 7 en parcourant le circuit d'injection 9 de matière injectable défini dans la deuxième pièce 8b et l'ouverture traversante 18a comprise dans l'élément d'habillage 4 reliant ce circuit d'injection 9 à ladite cavité 7. Ainsi, la matière injectable vient alors occuper tout le volume défini dans la cavité 7 en venant surmouler la zone 6 correspondante de la face visible 21a de l'élément d'habillage 4 agencée en regard de l'empreinte 5 et ce, dans l'optique de former cette ébauche 20 de l'élément tridimensionnel 10.

Une telle sous-étape de surmoulage 38 peut comprendre les phases suivantes :
- une phase de mise sous vide 40 de ladite cavité 7 avant la réalisation de la phase d'injection 39 de la matière injectable dans cette cavité 7, et/ou
- une phase de régulation 41 de la température de la cavité 7 notamment durant une période s'étalant avant le début de la phase d'injection 39 de matière injectable dans la cavité 7 jusqu'à la fin de cette phase injection 39 de matière voire après cette fin de cette phase infection 39.

De telles phases de mise sous vide 40 et de régulation 41 de la température visent à assurer une homogénéité structurelle de l'ébauche 20 de l'élément tridimensionnel 10 lors de son surmoulage sur l'élément d'habillage 4 afin de supprimer la présence de tout défaut susceptible d'être présent sur la face externe visible de cette ébauche 20. Un tel défaut peut par exemple résider en la présence d'une ligne de soudure sur la face externe visible de l'ébauche 20, formée suite à la jonction de deux flux d'écoulement de matière injectable dans la cavité 7. Une telle ligne de soudure est souvent présente sur des ébauches 20 d'éléments tridimensionnels 10 relatifs à des appliques présentant la forme d'un chiffre 6, 8 ou encore 0.

Lors de la mise en oeuvre de la phase de mise sous vide 40, le fluide présent dans la cavité 7 par exemple un gaz comme l'air est alors évacué de la cavité 7 avant la réalisation de la phase d'injection 39.

Lors de la réalisation de la phase de régulation 41 de la température de la cavité 7, la température dans la cavité 7 est alors portée à une température qui est supérieure ou sensiblement supérieure à la température de la matière injectable provenant du dispositif d'injection 11 de cette matière et ce, avant la réalisation de la phase d'injection 39. Par la suite, une fois la phase d'injection 39 de la matière injectable réalisée c'est-à-dire achevée, la cavité 7, est aussitôt refroidie.

Le procédé comprend ensuite, une étape de finalisation 42 de ladite au moins une ébauche de l'élément de tridimensionnel 10. Cette étape 42 comprend une sous-étape d'application 43 d'un revêtement sur ladite ébauche 20 de cet élément tridimensionnel 10 surmoulée sur l'élément d'habillage 4. Une telle sous-étape d'application 43 est mise en oeuvre après la réalisation d'une des sous-étapes suivantes de cette étape de finalisation 42 :
▪ une sous-étape de désassemblage 44 de la première pièce 8a de la deuxième pièce 8b du moule 2, ou
▪ une sous-étape de retrait 45 dudit moule 2 de la plaque de support 3 comprenant l'élément d'habillage 4 pourvu de ladite au moins une ébauche 20 de l'élément tridimensionnel 10 surmoulée sur la face visible de cet élément d'habillage 4.

En effet, à la suite de l'une ou l'autre de ces deux sous-étapes 44, 45, la sous-étape d'application 43 comprend une phase de dépôt 46 de la matière décorative et/ou fonctionnelle sur la face externe visible de chaque ébauche 20 de l'élément tridimensionnel 10 surmoulée sur cet élément d'habillage 4. A titre d'exemple, cette phase de dépôt 46 peut prévoir l'application sur cette face externe de l'ébauche 20 d'une matière décorative comprenant une composition métallique. Une telle phase de dépôt 46 peut alors être réalisée selon une technologie mettant en oeuvre une pulvérisation cathodique par courant continu ou encore une pulvérisation magnétron pulsé à haute puissance plus connu sous l'acronyme HIPIMS pour « *High Power Impulse Magnetron Sputtering ».*

On notera que lorsque sous-étape d'application 43 est réalisée à la suite de la sous-étape de désassemblage 44 de la première pièce 8a de la deuxième pièce 8b du moule 2, la phase de dépôt 46 est effectuée avec la plaque de support 3 qui est toujours montée/fixée sur la deuxième pièce 8b du moule 2. De plus, dans ce contexte, à la suite de cette phase de dépôt 46 le procédé prévoit la mise en oeuvre de la sous-étape de retrait 45 de la plaque de support 3 du moule 2.

Dans ce procédé, la sous-étape de retrait 45 comprend une phase de rupture 47 du point d'injection 22 liant la plaque de support 3 et/ou l'élément d'habillage 4, comprenant l'ébauche 20 de l'élément tridimensionnel 10 ou l'élément tridimensionnel 10, à la deuxième pièce 8b. Cette phase 47 comprend une sous-phase d'application 48 d'une force sur la plaque de support 3 comprenant cet élément d'habillage 4 visant à provoquer un déplacement en rotation ou en translation de cette plaque relativement à la deuxième pièce 8b et à provoquer ainsi la rupture du point d'injection 22. On notera qu'une fois le point d'injection 22 rompu, la base du pied de l'élément tridimensionnel 10 formé dans l'ouverture traversante 18a est sensiblement à fleur de la face cachée 21b de l'élément d'habillage 4 ou strictement à fleur de cette face cachée 21b.

Une fois la plaque de support 3 extraite de cette deuxième pièce 8b, l'élément d'habillage 4 est alors dissocié de la plaque de support 3 afin d'être monté dans une pièce d'horlogerie ou encore d'être à son tour finalisé par l'application d'une couche de revêtement sur sa face visible 21a restante c'est-à-dire sur la portion de cette face 21a qui n'est pas occultée par le ou les éléments tridimensionnels 10.

On notera en outre ainsi que nous l'avons évoqué précédemment que chaque élément d'habillage 4 peut comprendre plusieurs éléments tridimensionnels 10 et dans ces conditions autant de point d'injection 22 qu'il y a d'éléments tridimensionnels 10.

Ainsi l'invention participe notamment à la réalisation d'au moins un élément tridimensionnel 10 sur la face visible 21a d'éléments d'habillage 4 de pièces d'horlogerie.

## Revendications

1. Procédé de réalisation d'au moins un élément tridimensionnel (10) sur une face visible (21a) d'un élément d'habillage (4) d'une pièce d'horlogerie (100), ledit procédé comprenant les étapes suivantes :
- conception d'une plaque de support (3) comprenant l'élément d'habillage comprenant une sous-étape de création d'au moins une ouverture traversante (18a) dans l'épaisseur de l'élément d'habillage ladite ouverture traversante (18a) comprenant une section transversale variable le long de son axe de révolution (A) reliant les centres de ses orifices d'entrée et de sortie entre eux ;
- agencement (33) de la plaque de support (3) comprenant l'élément d'habillage (4) dans un moule (2) formé par l'assemblage réversible d'une première et d'une deuxième pièces (8a, 8b), ladite étape d'agencement (33) comprenant une sous-étape de formation (36) d'au moins une cavité (7) dans ce moule (2) par l'association de la première pièce (8a) comportant au moins une empreinte (5) avec la face visible (21a) de l'élément d'habillage (4) ;
- construction (37) d'une ébauche (20) de chaque élément tridimensionnel (10) sur la face visible (21a) de l'élément d'habillage (4) ladite étape (37) comprenant une sous-étape de surmoulage (38) par injection de matière injectable dans la cavité (7) par l'intermédiaire de l'ouverture traversante (18a) ménagée dans ledit élément d'habillage (4) pourvue de l'orifice d'entrée de ladite cavité (7) ;
- finalisation (42) de l'ébauche (20) de l'élément tridimensionnel (10) comprenant une sous-étape d'application (43) d'un revêtement sur ladite ébauche (20) surmoulée sur l'élément d'habillage (4) après la réalisation d'une des sous-étapes suivantes de cette étape de finalisation :
▪ une sous-étape de désassemblage (44) de la première pièce (8a) de la deuxième pièce (8b) du moule (2), ou
▪ une sous-étape de retrait (45) dudit moule (2) de la plaque de support (3) comprenant l'élément d'habillage (4) pourvu d'au moins une ébauche (20) d'un élément tridimensionnel (10) surmoulé sur sa face.

2. Procédé selon la revendication précédente, **caractérisé en ce que** ladite étape d'agencement (33) comprend une sous-étape d'assemblage (34) réversible de la deuxième pièce (8b) avec la plaque de support (3) comprenant l'élément d'habillage (4) ladite sous étape (34) comprenant une phase de connexion (35) d'une extrémité d'un circuit d'injection (9) ménagé dans cette deuxième pièce (8b) avec l'orifice d'entrée de l'ouverture traversante (18) de l'élément d'habillage (4).

3. Procédé selon l'une quelconque des revendications précédentes, **caractérisé en ce que** ladite sous-étape de retrait (45) comprend une phase de rupture (47) d'un point d'injection (22) liant ledit élément d'habillage (4) à la deuxième pièce (8b).

4. Procédé selon l'une quelconque des revendications précédentes, **caractérisé en ce que** la sous-étape de surmoulage (38) comprend une phase de régulation (41) de la température dudit moule (2) notamment durant une période s'étalant avant le début de la phase d'injection (39) de matière injectable dans la cavité (7) jusqu'à la fin de cette phase injection (39) de matière voire après cette fin de cette phase d'injection (39).

5. Procédé selon l'une quelconque des revendications précédentes, **caractérisé en ce que** la sous-étape de surmoulage (38) comprend une phase de mise sous vide (40) de ladite cavité (7) avant la phase d'injection (39) de la matière injectable dans cette cavité (7).

6. Procédé selon l'une quelconque des revendications précédentes, **caractérisé en ce que** la sous-étape d'application (43) comprend une phase de dépôt (46) d'une matière décorative et/ou fonctionnelle sur une face externe visible de l'ébauche (20) de l'élément tridimensionnel (10) surmoulée sur l'élément d'habillage (4).

7. Procédé selon l'une quelconque des revendications précédentes **caractérisé en ce qu'**il comprend une étape d'élaboration (30) d'au moins une empreintes (5) dans la première pièce (8a) à partir d"au moins une pièce originale relative audit au moins un élément tridimensionnel (10) devant être fabriqué.

8. Procédé selon l'une quelconque des revendications précédentes **caractérisé en ce que** l'étape de conception de la plaque de support (3) comprend une sous-étape de création d'au moins une ouverture borgne (18b) dans l'épaisseur de l'ébauche de l'élément d'habillage, l'ouverture borgne (18b) comprenant une section transversale variable le long de son axe de révolution (B) reliant les centres de l'orifice d'entrée de la matière injectable et du fond de cette ouverture (18b) entre eux.

9. Système (1) de réalisation d'au moins un élément tridimensionnel sur une face visible (21a) d'un élément d'habillage (4) d'une pièce d'horlogerie (100) mettant en oeuvre le procédé selon l'une quelconque des revendications 1 à 8, le système (1) comprenant :
- un moule (2) formée par l'assemblage réversible d'une première pièce (8a) et d'une deuxième pièce (8b) configurée pour recevoir une plaque de support (3) de l'élément d'habillage (4), le moule (2) comprenant au moins une cavité (7) formée par l'association de la première pièce (8a) comportant au moins une empreinte (5) avec la face visible (21a) de l'élément d'habillage (4), chaque cavité (7) participant à la réalisation d'une ébauche (20) de l'élément tridimensionnel (10) à partir d'un surmoulage par injection de matière injectable sur ladite face visible (21a), et
- un dispositif d'application (12) d'un revêtement sur ladite ébauche (20) surmoulée sur la face visible (21a) de l'élément d'habillage (4) participant à la finalisation de cette ébauche (20) de l'élément tridimensionnel (10).

10. Elément d'habillage pour une pièce d'horlogerie comprenant au moins un élément tridimensionnel susceptible d'être réalisé sur sa face visible (21a) à partir du procédé selon l'une quelconque des revendications 1 à 8.

11. Pièce d'horlogerie comprenant un élément d'habillage (4) selon la revendication précédente.
